# EUROPEAN PATENT SPECIFICATION

(11) **EP 1 601 244 B1**
(45) Date of publication and mention of the grant of the patent: **22.08.2007**
(21) Application number: 04717905.6
(22) Date of filing: 05.03.2004
(51) Int. Cl.: A01G 9/10

(54) **PLANT GROWING MATERIAL**
MATERIAL ZUM ZÜCHTEN VON PFLANZEN
MATIERE DE CROISSANCE POUR DES PLANTES

(30) Priority: 07.03.2003 NL 1022874
(43) Date of publication of application: 07.12.2005
(73) Proprietor: Nederlandse Organisatie voor Toegepast-Natuurwetenschappelijk Onderzoek TNO, 2628 VK Delft (NL)
(72) Inventor: VAN DER MEULEN, René, Mario, NL-1187 TH Amstelveen (NL); DE WITT, Davy, Nicolaas, Johannes, NL-2351 PH Leiderdorp (NL); VAN DUIJN, Albert, NL-2341 BV Oegstgeest (NL)
(74) Representative: Winckels, Johannes Hubertus F.
(86) International application number: PCT/NL2004/000165
(87) International publication number: WO 2004/077934

(56) References cited:
- WO-A-01/62072
- DE-A- 3 917 463
- FR-A- 2 697 404
- FR-A- 2 734 988
- US-A- 3 973 355
- US-A- 5 918 414
- PATENT ABSTRACTS OF JAPAN vol. 0174, no. 68 (C-1102), 26 August 1993 (1993-08-26) & JP 5 115225 A (SANWA KIKAKU:KK), 14 May 1993 (1993-05-14)

## Description

The invention relates to a growing material for plants comprising a coherent substrate material penetrable by roots for receiving and surrounding therein the roots of a plant to be supported by this substrate material.

When growing plants it is known, certainly in present-day glasshouse horticulture, to use substrates instead of soil for the root formation of the plants to be cultivated. As material for the substrate rock wool, glass wool, coco material, stone wires, cell foam, fibers *et cetera* as well as mixtures of these materials in block shape or mat shape can be considered. A condition is, on the one hand, that the substrate material is sufficiently coherent for supporting the plants and, or the other hand, that the roots can penetrate the substrate material. The substrate material should further be such that it can take up water with nutrients and pass this on to the roots of the plants. Thus, the supplied nutrients can be accurately distributed and regulated. A further advantage is that use can be made of an inert material which is free and can remain free of any pathogens present in cultivating soil. In contrast, JP-A-5115225 and US-A-5918414 disclose cultivating in soil.

With the invention, an improved growing material of the type described in the preamble is contemplated.

According to the invention this is obtained when in the substrate, locally, provisions have been embedded which are manufactured from a material which is impenetrable by the roots and at least partly surrounded by material which is penetrable by roots, thereby forming, locally, embedded in the substrate for the roots, a layer in the form of a porous, net-shaped or sieve-shaped barrier.

Research has shown that roots in a substrate material have the tendency to grow straight downwards without or with a limited number of branches, so that at the bottom side of the layer of substrate material a ball of roots is formed. Further, water supplied to the substrate material also has the tendency to drift downwards, so that the situation can arise that the larger part of the roots of a plant is surrounded by stagnant water.

By presently, according to the present invention, providing, locally, areas which are impenetrable by the roots, these can no longer grow straight downwards in an unhindered manner, but are forced by the layer-shaped, porous net-shaped or sieve-shaped barrier to deflect sideways and to bend, which results in several and multiple branched roots, i.e. the roots spread over a larger area and the substrate material is penetrated by roots more completely; therefore more or less according to the growth of roots in heterogeneous soil. In fact, the bottom of the substrate block or substrate layer is elevated and made penetrable locally. The ball of roots initially present on the bottom is now present above the porous net-shaped or sieve-shaped barrier but it can penetrate it and then grow perpendicularly downwards according to the natural pattern, albeit, now, uniformly distributed over the cross section of the substrate. Due to the larger amount of branched roots in, in particular, the upper part of the substrate material, the volume of the substrate to be maximally used, which is used for, for instance, water, nutrient and oxygen uptake by the roots, is considerably enlarged resulting in more abundantly and healthier growing plants, which also enhances the productivity of fruit-bearing plants, such as, for instance, cucumbers.

According to a further embodiment of the invention, in order to optimize the spreading and branching of roots in transverse direction of the substrate, it is preferred that the porous net-shaped or sieve-shaped barrier has an upper surface extending substantially transverse to the main direction of growth of the roots. Realizing such a porous net-shaped or sieve-shaped barrier can be done in a relatively simple manner, when the porous net-shaped or sieve-shaped barrier forms a horizontal separating layer in the substrate, or, conversely, extends downwards in a curving manner from a central crown top into the substrate material, it further being preferred that in the area of its crown top, the porous net-shaped or sieve-shaped barrier is designed so as to be uninterrupted.

For such a branched root growth to be obtained in the substrate material, the roots should not be able to push aside the impenetrable provisions. Therefore, if the substrate material does not have an intrinsic securing effect on those provisions, it can be preferred according to a further embodiment of the invention, that the provisions are provided so as to be anchored, at least substantially not movable within the substrate material.

The form and manner of growth of the roots can be influenced in accordance with the desired object when, according to a further embodiment of the invention, the impenetrable barrier has been provided in the substrate material as locally distributed, embedded obstacles. With the packing density and distribution of the obstacles, the growth of the roots can then be influenced in the desired manner.

In order to have deflection by blocking the root growth through creation of a mechanical resistance not be a growth impediment but, conversely, a stimulation of the spreading and branching, it can be advantageous according to a further embodiment of the invention to provide the obstacles with a smooth surface. This effect can be further enhanced when the obstacles have a spherical configuration. The obstacles can then be manufactured from, inter alia, stone. However, according to the invention, it is particularly preferred that the obstacles consist of glass pearls. They form highly effective, impenetrable obstacles to roots, which, however, in addition thereto, due to their smooth spherical shape, create optimal circumstances for the root growth to take place in the desired shape, branching out and spreading over the substrate material.

In addition, according to a further embodiment of the invention, it is also possible that the impenetrable barrier is formed from a similar inert material to the substrate, but having a considerably higher density, i.e. a density impenetrable by the roots, than the surrounding substrate material which is penetrable by the roots.

Instead of a mechanical blocking of the root growth, also a chemical barrier can be chosen. According to a further embodiment of the invention this can be realized when the impenetrable barrier consists of at least one chemical layer, more in particular a hormone layer. A combination of mechanical and chemical blocking can also be opted for. The porous net-shaped or sieve-shaped barrier can then consist of an inert material to which a chemical layer, for instance a plant hormone, has been applied.

As stated, the roots have the tendency to grow downwards as rapidly as possible into the substrate material. In order to undo this tendency as rapidly as possible, according to a further embodiment of the invention, it is in particular preferred that the porous net-shaped or sieve-shaped barrier is located at least directly below and/or in the proximity of a plant hole provided in the substrate material.

With reference to an exemplary embodiment represented in the accompanying drawing, the growing material according to the invention will presently be elucidated further, albeit exclusively by way of non limitative example. In the drawing:
Figure 1 shows a top plan view of a block of growing material according to be invention; and
Figure 2 shows a cross section along line II-II in Figure 1.

In the Figures, a rectangular block 1 of growing material is represented, while a substrate material such as, for instance, rock wool, glass wool, coco material, rock wires, cell foam, fibres and the like can be considered, from which, starting from upper surface la, symmetrically, a smaller rectangular block 2 has been cut, provided in its center with a plant hole 3, in which sowing can take place or in which a pressed pot with a germinating plant can be placed for the purpose of cultivating the plant (further). On the bottom of the recess in the block 1 obtained by cutting out the block 2, a layer of glass pearls 4 is provided whereupon the block 2 with the plant hole 3 provided therein is placed back into the block.

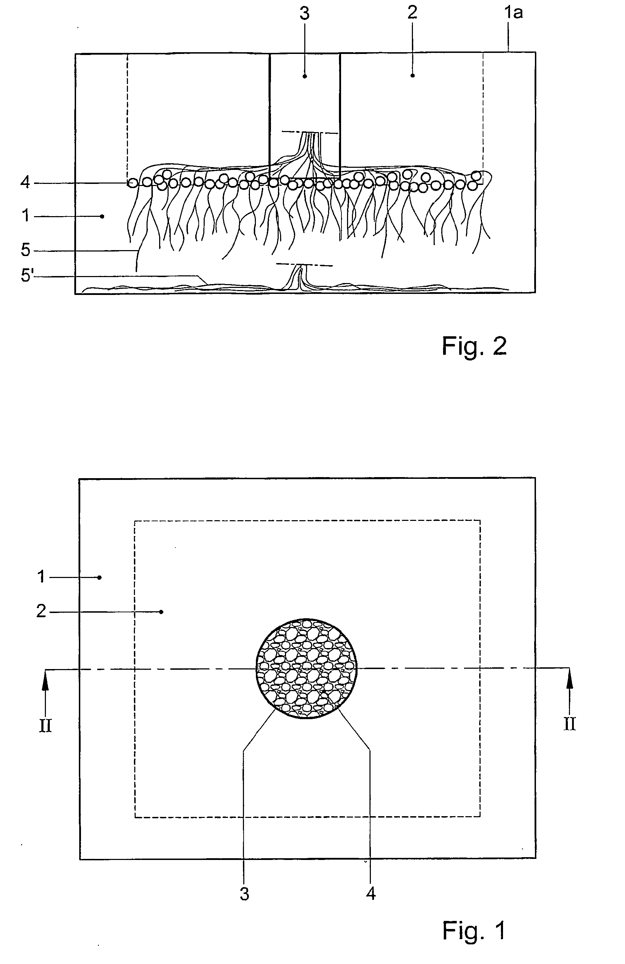

During growing, the roots of a plant encounter the layer of glass pearls 4 and are forced to grow around those glass pearls 4. This results in a branching and spreading of the roots over the layer of glass pearls 4 resulting in a network of roots branching and spreading at the location of the layer of glass pearls 4, as indicated in Figure 2 with reference numeral 5, and which spreads further downwards from this level over the block 1 through the layer of glass pearls 4. This in contrast with a situation wherein the layer of glass pearls 4 would have been omitted. Then, the roots would grow downwards substantially without or with hardly any branches to the lower side of the block 1 and there, halted by the support layer (not represented) onto which the block 1 has been placed, spread sideways, as indicated in Figure 2 with reference numeral 5'.

As water has the tendency to drift downwards in such a substrate material, a root network 5' would then be surrounded by water, which would negatively affect the desired oxygen uptake by the roots. Due to the layer of glass pearls 4, a root network 5 is obtained which already has multiple branches at a higher level and has spread more over the block 1. As a result, it is possible to use the volume of the substrate as optimally as possible for, for instance, uptake of water, nutrients and oxygen by the roots, resulting in a more abundant and healthier growing plant, which also enhances the productivity of fruit-bearing plants, such as, for instance, cucumbers.

It is self-evident that within the framework of the invention as laid down in the accompanying claims, in addition to the already described variants, many further modifications and variants are possible. For instance, the impenetrable provisions can be composed from obstacles. Also, combinations of mechanical and chemical obstacles are possible. Although in the exemplary embodiment a single layer of glass pearls is represented, such layers can also be provided on several levels. These layers need not, as shown, have a flat configuration but can also be of curved design, for instance partly spherical or elliptical with the crown centrally below the ball of roots coming from the plant. Naturally, it is also possible to realize the porous net-shaped or sieve-shaped barrier in another manner than by applying a layer of glass pearls. Also, other manners of realization than cutting the block from another block are possible. For instance, composing a block of growing material from successive layers can be considered. In the exemplary embodiment, a layer of glass pearls is shown extending over a relatively large area. However, also other uses are conceivable in which the application of such a layer or a similar layer with a smaller size, for instance only at the location of the plant hole, are a possibility.

## Claims

1. A growing material (1, 2) for plants comprising a coherent substrate material penetrable by roots for including and surrounding therein roots of a plant to be supported by the substrate material, **characterized in that**, locally, in the substrate, provisions (4) have been embedded which are manufactured from a material impenetrable by roots and, at least partly, are surrounded by material penetrable by roots, thereby forming, locally, embedded in the substrate for the roots, a layer in the form of a porous net-shaped or sieve-shaped barrier (4).

2. A growing material according to claim 1, **characterized in that** the porous net-shaped or sieve-shaped barrier (4) has an upper surface extending substantially transverse to the main direction of growth of the roots.

3. A growing material according to claim 1 or 2, **characterized in that** the porous net-shaped or sieve-shaped barrier (4) forms a horizontal separating layer in the substrate.

4. A growing material according to anyone of the preceding claims, **characterized** that the porous net-shaped or sieve-shaped barrier (4) extends downwards in a curving manner from a central crown top into the substrate material.

5. A growing material according to claim 4, **characterized in that** the porous net-shaped or sieve-shaped barrier (5) in the area of its crown top is designed so as to be uninterrupted.

6. A growing material according to anyone of the preceding claims, **characterized in that** the provisions (4) are anchored, at least embedded in the substrate material in a substantially non-moveable manner.

7. A growing material according to anyone to preceding claims, **characterized** that the porous net-shaped or sieve-shaped barrier (4) is provided in the substrate material as locally distributed, embedded obstacles.

8. A growing material according to claim 7, **characterized in that** the obstacles (4) have a smooth surface.

9. A growing material according to claim 7 or 8, **characterized in that** the obstacles (4) have a spherical configuration.

10. A grow material according to anyone of claims 7 - 9, **characterized in that** the obstacles (4) are manufactured from stones, at least partly.

11. A growing material according to anyone of claims and 7 - 9, **characterized in that** obstacles (4) consist of glass pearls, at least partly.

12. A growing material according to anyone to preceding claims, **characterized** that the porous net-shaped or sieve-shaped barrier (4) is formed from a similar inert material to the substrate, yet has a considerably higher density, i.e. a density impenetrable by the roots, than the surrounding substrate material which does allow the roots through.

13. A growing material according to anyone of the preceding claims, **characterized in that** the porous net-shaped or sieve-shaped barrier (4) consist of at least one chemical layer, more in particular a hormone layer.

14. A growing material according to anyone of the preceding claims, **characterized** that the porous net-shaped or sieve-shaped barrier (4) is located at least directly below and/or in the proximity of a plant hole (3) provided in the substrate material.

## Patentansprüche

1. Wachstumsmaterial (1, 2) für Pflanzen umfassend ein zusammenhängendes Substratmaterial, das für Wurzeln durchdringbar ist, zum Einschließen und Umgeben von Wurzeln einer Pflanze, die von dem Substratmaterial gestützt werden soll, **dadurch gekennzeichnet, dass** lokal in dem Substrat Einrichtungen (4) eingebettet worden sind, die aus einem Material hergestellt sind, das für Wurzeln undurchdringbar ist, und die zumindest teilweise von Material umgeben sind, das für Wurzeln durchdringbar ist, und **dadurch** lokal, eingebettet in dem Substrat für die Wurzeln, eine Schicht in Form einer porösen netzförmigen oder siebförmigen Barriere (4) bilden.

2. Wachstumsmaterial gemäß Anspruch 1, **dadurch gekennzeichnet, dass** die poröse netzförmige oder siebförmige Barriere (4) eine obere Oberfläche hat, die sich im Wesentlichen quer zur Hauptrichtung des Wachstums der Wurzeln erstreckt.

3. Wachstumsmaterial gemäß Anspruch 1 oder 2, **dadurch gekennzeichnet, dass** die poröse netzförmige oder siebförmige Barriere (4) eine horizontal trennende Schicht in dem Substrat bildet.

4. Wachstumsmaterial gemäß einem der vorhergehenden Ansprüche, **dadurch gekennzeichnet, dass** sich die poröse netzförmige oder siebförmige Barriere (4) in einer gekrümmten Art und Weise von einem zentralen Oberteil in das Substratmaterial erstreckt.

5. Wachstumsmaterial gemäß Anspruch 4, **dadurch gekennzeichnet, dass** die poröse netzförmige oder siebförmige Barriere (5) im Bereich ihres Oberteils so ausgestaltet ist, dass sie kontinuierlich ist.

6. Wachstumsmaterial gemäß einem der vorhergehenden Ansprüche, **dadurch gekennzeichnet, dass** die Einrichtungen (4) in einer im Wesentlichen nicht bewegbaren Art und Weise in dem Substratmaterial verankert oder zumindest eingebettet sind.

7. Wachstumsmaterial gemäß einem der vorhergehenden Ansprüche, **dadurch gekennzeichnet, dass** die poröse netzförmige oder siebförmige Barriere (4) in dem Substratmaterial als lokal verteilte, eingebettete Hindernisse bereitgestellt wird.

8. Wachstumsmaterial gemäß Anspruch 7, **dadurch gekennzeichnet, dass** die Hindernisse (4) eine glatte Oberfläche aufweisen.

9. Wachstumsmaterial gemäß Anspruch 7 oder 8, **dadurch gekennzeichnet, dass** die Hindernisse (4) eine kugelförmige Struktur haben.

10. Wachstumsmaterial gemäß einem der Ansprüche 7 bis 9, **dadurch gekennzeichnet, dass** die Hindernisse (4) zumindest teilweise aus Steinen hergestellt sind.

11. Wachstumsmaterial gemäß einem der Ansprüche 7 bis 9, **dadurch gekennzeichnet, dass** die Hindernisse (4) zumindest teilweise aus Glasperlen bestehen.

12. Wachstumsmaterial gemäß einem der vorhergehenden Ansprüche, **dadurch gekennzeichnet, dass** die poröse netzförmige oder siebförmige Barriere (4) aus einem ähnlich inerten Material wie das Substrat gebildet ist, jedoch eine deutlich höhere Dichte als das umgebende Substratmaterial, welches die Wurzeln durchlässt, aufweist, d.h. eine Dichte, die für die Wurzeln undurchdringbar ist.

13. Wachstumsmaterial gemäß einem der vorhergehenden Ansprüche, **dadurch gekennzeichnet, dass** die poröse netzförmige oder siebförmige Barriere (4) aus mindestens einer chemischen Schicht, insbesondere aus einer Hormonschicht besteht.

14. Wachstumsmaterial gemäß einem der vorhergehenden Ansprüche, **dadurch gekennzeichnet, dass** die poröse netzförmige oder siebförmige Barriere (4) zumindest direkt unter und/oder in der Nähe einer Pflanzenöffnung (3), die in dem Substratmaterial bereitgestellt ist, lokalisiert ist.

## Revendications

1. Matière de croissance (1, 2) pour des plantes, comportant un matériau de substrat cohérent pouvant être pénétré par des racines pour inclure et entourer dans celui-ci des racines d'une plante à supporter par le matériau de substrat, **caractérisée en ce que**, localement, dans le substrat, des agencements (4) ont été enrobés qui sont fabriqués à partir d'un matériau impénétrable par des racines et, au moins partiellement, sont entourés par le matériau pouvant être pénétré par des racines, formant ainsi, localement, enrobée dans le substrat destiné aux racines, une couche ayant la forme d'une barrière poreuse en forme de filet ou en forme de tamis (4).

2. Matière de croissance selon la revendication 1, **caractérisée en ce que** la barrière poreuse en forme de filet ou en forme de tamis (4) a une surface supérieure s'étendant sensiblement transversalement par rapport à la direction principale de croissance des racines.

3. Matière de croissance selon la revendication 1 ou 2, **caractérisée en ce que** la barrière poreuse en forme de filet ou en forme de tamis (4) forme une couche de séparation horizontale dans le substrat.

4. Matière de croissance selon l'une quelconque des revendications précédentes, **caractérisée en ce que** la barrière poreuse en forme de filet ou en forme de tamis (4) s'étend vers le bas d'une manière s'incurvant à partir du sommet d'une couronne centrale dans le matériau de substrat.

5. Matière de croissance selon la revendication 4, **caractérisée en ce que** la barrière poreuse en forme de filet ou en forme de tamis (5) dans les zones de son sommet de couronne est conçue de manière à être ininterrompue.

6. Matière de croissance selon l'une quelconque des revendications précédentes, **caractérisée en ce que** les agencements (4) sont ancrés, au moins enrobés dans le matériau de substrat sensiblement d'une manière non-mobile.

7. Matière de croissance selon l'une quelconque des revendications précédentes, **caractérisée en ce que** la barrière poreuse en forme de filet ou en forme de tamis (4) est agencée dans le matériau de substrat sous la forme d'obstacles enrobés répartis localement.

8. Matière de croissance selon la revendication 7, **caractérisée en ce que** les obstacles (4) ont une surface lisse.

9. Matière de croissance selon la revendication 7 ou 8, **caractérisée en ce que** les obstacles (4) ont une configuration sphérique.

10. Matière de croissance selon la revendication 7 à 9, **caractérisée en ce que** les obstacles (4) sont fabriqués au moins partiellement à partir de pierres.

11. Matière de croissance selon l'une quelconque des revendications 7 à 9, **caractérisée en ce que** les obstacles (4) sont constitués de billes de verre, au moins partiellement.

12. Matière de croissance selon l'une quelconque des revendications précédentes, **caractérisée en ce que** la barrière poreuse en forme de filet ou en forme de tamis (4) est formée à partir d'une matière inerte similaire au substrat, a cependant une densité considérablement plus élevée, c'est-à-dire une densité ne permettant pas la pénétration par les racines, que le matériau de substrat entourant qui permet aux racines de traverser.

13. Matière de croissance selon l'une quelconque des revendications précédentes, **caractérisée en ce que** la barrière poreuse en forme de filet ou en forme de tamis (4) est constituée d'au moins une couche chimique, plus particulièrement une couche d'hormones.

14. Matière de croissance selon l'une quelconque des revendications précédentes, **caractérisée en ce que** la barrière poreuse en forme de filet ou en forme de tamis (4) est positionnée au moins directement en dessous et/ou à proximité d'un trou pour plante (3) agencé dans le matériau de substrat.
